# EUROPÄISCHE PATENTSCHRIFT

(11) **EP 3 615 367 B1**
(45) Veröffentlichungstag und Bekanntmachung des Hinweises auf die Patenterteilung: **16.12.2020**
(21) Anmeldenummer: 18721006.7
(22) Anmeldetag: 19.04.2018
(51) Int. Cl.: B60K 35/00, G02B 6/08

(54) **ANZEIGESYSTEM**
DISPLAY SYSTEM
SYSTÈME D'AFFICHAGE

(30) Priorität: 26.04.2017 DE 102017207041
(43) Veröffentlichungstag der Anmeldung: 04.03.2020
(73) Patentinhaber: Audi AG, 85045 Ingolstadt (DE)
(72) Erfinder: WALL, Christian, 85122 Hitzhofen (DE)
(86) Internationale Anmeldenummer: PCT/EP2018/060057
(87) Internationale Veröffentlichungsnummer: WO 2018/197334

(56) Entgegenhaltungen:
- US-A- 6 021 241
- US-A1- 2007 061 068

## Beschreibung

Die Erfindung betrifft ein Anzeigesystem und ein Verfahren zum Darstellen mindestens eines Anzeigeinhalts.

Ein Anzeigesystem ist dazu ausgebildet, einen Anzeigeinhalt optisch darzustellen. Dabei kann ein derartiges Anzeigesystem als Display bzw. Monitor ausgebildet sein und/oder bezeichnet werden.

Eine Anzeigevorrichtung für ein Fahrzeug und ein Verfahren zum Anzeigen von Informationen in einem Innenraum eines Fahrzeugs sind aus der Druckschrift DE 10 2008 037 977 A1 bekannt.

Ein Informationsanzeigegerät für ein Fahrzeug ist aus der Druckschrift US 2007/0061068 A1 bekannt.

Ein weiteres Anzeigegerät für ein Fahrzeug ist aus der Druckschrift US 2015/0328989 A1 bekannt.

Vor diesem Hintergrund stellt sich die Aufgabe, einen Anzeigeinhalt eines Anzeigegeräts anzupassen.

Die Aufgabe wird mit einem Anzeigesystem und einem Verfahren mit den Merkmalen der unabhängigen Patentansprüche gelöst. Ausführungsformen des Anzeigesystems und des Verfahrens gehen aus den abhängigen Patentansprüchen und der Beschreibung hervor.

Das erfindungsgemäße Anzeigesystem weist mindestens ein Anzeigegerät, mindestens ein Lichtleitstrukturmodul und eine Deckscheibe auf, wobei das mindestens eine Lichtleitstrukturmodul zwischen dem mindestens einen Anzeigegerät und der Deckscheibe angeordnet ist. Das mindestens eine Anzeigegerät umfasst ein Anzeigefeld zum optischen Darstellen eines Anzeigeinhalts, wobei das Anzeigefeld und/oder das Anzeigegerät von einem sichtbaren Rahmen umschlossen ist bzw. sind, wobei der sichtbare Rahmen einerseits von einem inneren Rand und andererseits von einem äußeren Rand begrenzt ist. Der mindestens eine Abschnitt des äußeren Rands definiert auf der Deckscheibe durch Parallelprojektion entlang einer senkrecht zu der Deckscheibe orientierte Achse mindestens eine Linie. Das mindestens eine Lichtleitstrukturmodul ist dazu ausgebildet, den Anzeigeinhalt des mindestens einen Anzeigegeräts zu vergrößern bzw. zu zoomen und den mindestens einen Abschnitt des ersten inneren Rands des sichtbaren Rahmens und somit des Anzeigefelds auf die mindestens eine definierte Linie der Deckscheibe zu projizieren, wobei durch die Deckscheibe lediglich der Anzeigeinhalt des mindestens einen Anzeigefelds darstellbar ist.

In der Regel ist das mindestens eine Lichtleitstrukturmodul auf dem mindestens einen Anzeigegerät und die Deckscheibe auf dem mindestens einen Lichtleitstrukturmodul angeordnet.

Beim optischen Darstellen bzw. Anzeigen eines Anzeigeinhalts des mindestens einen Anzeigegeräts durch das mindestens eine Lichtleitstrukturmodul und die Deckscheibe wird der Rahmen des mindestens einen Anzeigegeräts ausgeblendet.

Das Anzeigesystem umfasst in Ausgestaltung mehrere Anzeigegeräte, wobei für zwei in der Regel unmittelbar benachbarte Anzeigegeräte vorgesehen ist, dass mindestens ein Abschnitt eines zweiten äußeren Rands eines sichtbaren Rahmens, der ein Anzeigefeld eines ersten Anzeigegeräts umschließt, und mindestens ein Abschnitt eines zweitens äußeren Rands eines sichtbaren Rahmens, der ein Anzeigefeld eines zweiten Anzeigegeräts umschließt, an mindestens einem gemeinsamen Abschnitt bspw. unmittelbar aneinandergrenzen und/oder aufeinander stoßen. Dabei ist je nach Definition jeweils ein Anzeigegerät von dem Rahmen umschlossen. Alternativ oder ergänzend ist der Rahmen, der zumindest das Anzeigefeld eines jeweiligen Anzeigegeräts umschließt als Komponente des Anzeigegeräts ausgebildet. Dieser mindestens eine gemeinsame Abschnitt und die beiden Abschnitte der äußeren Ränder der Rahmen der unmittelbar benachbart angeordneten Anzeigegeräte sind auf einer Geraden angeordnet. Außerdem definiert dieser mindestens eine gemeinsame Abschnitt durch Parallelprojektion entlang einer zu der Deckscheibe senkrechten Achse die mindestens eine Linie der Deckscheibe, wobei die Linie auf einer äußeren Oberfläche der Deckscheibe verläuft, die dem mindestens einen Lichtleitstrukturmodul abgewandt ist, wohingegen eine innere Oberfläche der Deckscheibe, die parallel zu der äußeren Oberfläche angeordnet ist, dem mindestens einen Lichtleitstrukturmodul zugewandt ist und diese in Ausgestaltung berührt. Dabei ist es auch möglich, dass die mindestens eine bspw. virtuell definierte bzw. definierbare Linie auf der inneren Oberfläche der Deckscheibe angeordnet ist.

Das mindestens eine Lichtleitstrukturmodul ist dazu ausgebildet, den mindestens einen Abschnitt des ersten inneren Rands des sichtbaren Rahmens, der das Anzeigefeld des ersten Anzeigegeräts begrenzt bzw. umschließt, und den mindestens einen Abschnitt des ersten inneren Rands, der das Anzeigefeld des zweiten Anzeigegeräts begrenzt bzw. umschließt, auf die bzw. dieselbe mindestens eine Linie der Deckscheibe zu projizieren. Der mindestens eine gemeinsame Abschnitt der zweiten äußeren Ränder beider sichtbarer Rahmen der Anzeigefelder definiert durch Parallelprojektion entlang der Achse die mindestens eine Linie der Deckscheibe.

Weiterhin ist vorgesehen, dass mindestens ein Abschnitt eines zweiten äußeren Rands des sichtbaren Rahmens, der das mindestens eine Anzeigefeld umschließt bzw. begrenzt, wobei der mindestens eine Abschnitt des zweiten äußeren Rands des sichtbaren Rahmens die mindestens eine Linie der Deckscheibe durch Parallelprojektion entlang der zu der Deckscheibe senkrechten Achse definiert, die entlang einer Kante der Deckscheibe verläuft. Das mindestens eine Lichtleitstrukturmodul ist dazu ausgebildet, den mindestens einen Abschnitt des ersten Rands des sichtbaren Rahmens, der das Anzeigefeld des mindestens einen Anzeigegeräts begrenzt und der dem mindestens einen Abschnitt des zweiten äußeren Rands des sichtbaren Rahmens zugeordnet ist, auf die mindestens eine Linie entlang des Rands der Deckscheibe zu projizieren.

In der Regel ist jedem Anzeigegerät ein Lichtleitstrukturmodul zugeordnet. Dieses eine Lichtleitstrukturmodul ist zwischen dem jeweiligen Anzeigegerät, dem es zugeordnet ist, und der Deckscheibe angeordnet. Im Fall der zwei unmittelbar benachbart angeordneten Anzeigegeräte ist vorgesehen, dass zwei Lichtleitstrukturmodule ebenfalls unmittelbar benachbart angeordnet sind. Ein erstes Lichtleitstrukturmodul, das einem ersten Anzeigegerät zugeordnet ist, ist dazu ausgebildet, den mindestens einen Abschnitt des ersten inneren Rands des sichtbaren Rahmens, der das Anzeigefeld des ersten Anzeigegeräts begrenzt bzw. umschließt, auf die bzw. dieselbe mindestens eine Linie der Deckscheibe zu projizieren, wobei der mindestens eine gemeinsame Abschnitt der zweiten äußeren Ränder beider sichtbarer Rahmen der Anzeigefelder beider in der Regel unmittelbar benachbarter Anzeigegeräte durch Parallelprojektion entlang der zu der Deckscheibe senkrechten Achse die mindestens eine Linie der Deckscheibe definiert. Ein zweites Lichtleitstrukturmodul, das einem zweiten Anzeigegerät zugeordnet ist, ist dazu ausgebildet, den mindestens einen Abschnitt des ersten inneren Rands des sichtbaren Rahmens, der das Anzeigefeld des zweiten Anzeigegeräts begrenzt bzw. umschließt, ebenfalls auf die bzw. dieselbe mindestens eine Linie der Deckscheibe zu projizieren, wobei der mindestens eine gemeinsame Abschnitt der zweiten äußeren Ränder beider sichtbarer Rahmen der Anzeigefelder beider in der Regel unmittelbar benachbarter Anzeigegeräte und die mindestens eine Linie der Deckscheibe zueinander parallel sind.

Das mindestens eine Lichtleitstrukturmodul ist zwischen dem mindestens einen Anzeigegerät und der Deckscheibe angeordnet und weist einen Körper mit einer ersten Außenseite, die dem mindestens einen Anzeigegerät zugewandt ist, und einer zweiten Außenseite, die der Deckscheibe zugewandt ist, auf. Dabei sind die beiden Außenseiten zueinander parallel angeordnet, wobei die erste Außenseite eine kleinere Fläche als die zweite Außenseite aufweist. Mindestens ein Abschnitt mindestens einer Kante der ersten Außenseite des mindestens einen Lichtleitstrukturmoduls ist dem mindestens einen Abschnitt des mindestens einen ersten inneren Rands des sichtbaren Rahmens des Anzeigefelds des mindestens einen Anzeigegeräts zugeordnet, wobei die erste Außenseite des mindestens einen Lichtleitstrukturmoduls und das Anzeigefeld des mindestens einen Anzeigegeräts deckungsgleich sowie einander zugewandt sind. Außerdem ist mindestens ein Abschnitt mindestens einer Kante der zweiten Außenseite des mindestens einen Lichtleitstrukturmoduls dem mindestens einen Abschnitt der mindestens einen Linie der Deckscheibe zugeordnet, wobei diese mindestens eine Linie durch Parallelprojektion des mindestens einen Abschnitts des zweiten äußeren Rands desselben sichtbaren Rahmens entlang der senkrecht zu der Deckscheibe orientierten Achse definiert ist. Der Rahmen ist von demselben mindestens einen Abschnitt des ersten inneren Rands begrenzt, der dem mindestens einen Abschnitt der ersten Kante der ersten Außenseite des mindestens einen Lichtleitstrukturmoduls zugeordnet ist.

In Ausgestaltung umfasst das mindestens eine Anzeigegerät ein n-eckiges Anzeigefeld zum Darstellen eines Anzeigeinhalts. Dabei steht n in dem Ausdruck n-eckig für eine beliebige natürliche Zahl, beispielsweise drei, wobei das Anzeigefeld beispielsweise dreieckig ausgestaltet ist. Dabei sind der innere Rand des sichtbaren Rahmens und der äußere Rand des sichtbaren Rahmens, die zueinander parallel angeordnet sind, ebenfalls n-eckig ausgebildet. In Ausgestaltung sind die Abschnitte beider Ränder des sichtbaren Rahmens einander zugeordnet, wobei der mindestens eine Abschnitt des ersten inneren Rands auch das Anzeigefeld des mindestens einen Anzeigegeräts und/oder das mindestens eine Anzeigefeld begrenzt. Die Ränder eines Rahmens sind in der Regel zueinander parallel angeordnet, wobei der äußere Rand den inneren Rand umschließt. Eine Anzeigefläche eines Anzeigegeräts ist in Ausgestaltung eckig, bspw. viereckig, d. h. bspw. rechteckig oder quadratisch, ausgebildet. Die Ränder des Rahmens eines Anzeigegeräts sind entsprechend eckig ausgebildet, wobei ein innerer Rand dieselbe Seitenlänge wie eine äußere Kante eines Anzeigefelds aufweist. Dabei sind Ränder eines eckigen Rahmens, der ein eckiges Anzeigefeld umschließt, gerade. Entsprechend sind die mindestens eine Linie der Deckscheibe sowie der gemeinsame Abschnitt der äußeren Ränder gerade.

Dabei ist es möglich, dass das mindestens eine Lichtleitstrukturmodul zwischen dem mindestens einen Anzeigegerät und der Deckscheibe einen pyramidenstumpfförmigen Körper aufweist. Die beiden Außenseiten eines derartigen pyramidenförmigen Körpers des mindestens einen Lichtleitstrukturmoduls sind entsprechend einer Form des Anzeigefelds des mindestens einen Anzeigegeräts, dem das mindestens eine Lichtleitstrukturmodul zugeordnet ist, ebenfalls n-eckig, in der Regel viereckig, bspw. rechteckig ausgebildet.

Bei dem Anzeigesystem ist die Deckscheibe als Deckglas ausgebildet. Die Deckscheibe ist aus einem transparenten Material ausgebildet, wobei es sich bspw. um Glas oder einen Kunststoff handelt.

Das Anzeigesystem ist in einem Fahrzeug und/oder für ein Fahrzeug einsetzbar und an einer Innenwand in einem Innenraum des Fahrzeugs anordenbar.

Das mindestens eine Lichtleitstrukturmodul ist dazu ausgebildet, das Licht, durch das der Anzeigeinhalt des Anzeigefelds des mindestens einen Anzeigegeräts bereitgestellt wird, zu brechen und somit den Anzeigeinhalt zu vergrößern. Dabei ist das mindestens eine Lichtleitstrukturelement bspw. als pyramidenstumpfförmiges und/oder als im Querschnitt trapezförmiges Prisma, als Lichtkontrollfilm (light control film) und/oder holographisch optisches Element ausgebildet und besteht bspw. aus Kunststoff.

Das erfindungsgemäße Verfahren ist zum optischen Darstellen eines Anzeigeinhalts mit einem Anzeigesystem vorgesehen, das mindestens ein Anzeigegerät, mindestens ein Lichtleitstrukturmodul und eine Deckscheibe aufweist, wobei das mindestens eine Lichtleitstrukturmodul zwischen dem mindestens einen Anzeigegerät und der Deckscheibe angeordnet ist, wobei das mindestens eine Anzeigegerät ein Anzeigefeld zum Darstellen eines Anzeigeinhalts umfasst, wobei das Anzeigefeld von einem sichtbaren Rahmen umschlossen ist, wobei der sichtbare Rahmen einerseits von einem ersten inneren Rand und andererseits von einem zweiten äußeren Rand begrenzt ist. Bei dem Verfahren wird durch mindestens einen Abschnitt des äußeren Rands des sichtbaren Rahmens durch Parallelprojektion entlang einer auf der Deckscheibe mindestens eine Linie definiert.

Der Anzeigeinhalt des mindestens einen Anzeigegeräts wird mit dem mindestens einen Lichtleitstrukturmodul vergrößert, wobei der mindestens eine Abschnitt des ersten inneren Rands des sichtbaren Rahmens und somit des Anzeigefelds von dem mindestens einen Lichtleitstrukturmoduls auf die mindestens eine Linie der Deckscheibe projiziert wird, wobei durch die Deckscheibe lediglich der Anzeigeinhalt des mindestens einen Anzeigefelds dargestellt wird und der eigentlich sichtbare Rahmen ausgeblendet wird.

Das Verfahren ist in Ausgestaltung zum Darstellen eines für mindestens zwei Anzeigegeräte gemeinsamen Anzeigeinhalts vorgesehen. Dabei wird für zwei in der Regel unmittelbar benachbarte Anzeigegeräte vorgesehen, dass mindestens ein Abschnitt eines zweiten äußeren Rands eines sichtbaren Rahmens, der ein Anzeigefeld eines ersten Anzeigegeräts umschließt, und mindestens ein Abschnitt eines zweitens äußeren Rands eines sichtbaren Rahmens, der ein Anzeigefeld eines zweiten Anzeigegeräts umschließt, an mindestens einem gemeinsamen Abschnitt in der Regel unmittelbar aneinandergrenzen und/oder aufeinander stoßen. Dieser mindestens eine gemeinsame Abschnitt definiert die mindestens eine Linie der Deckscheibe durch Parallelprojektion einer senkrecht zu der Deckscheibe orientierten Achse. Diese mindestens eine Linie verläuft auf einer äußeren Oberfläche der Deckscheibe, die dem mindestens einen Lichtleitstrukturmodul abgewandt ist, wohingegen eine innere Oberfläche der Deckscheibe, die parallel zu der äußeren Oberfläche angeordnet ist, dem mindestens einen Lichtleitstrukturmodul zugewandt ist und diese in Ausgestaltung berührt. Der mindestens eine Abschnitt des ersten inneren Rands des sichtbaren Rahmens, der das Anzeigefeld des ersten Anzeigegeräts begrenzt bzw. umschließt, und der mindestens eine Abschnitt des ersten inneren Rands, der das Anzeigefeld des zweiten Anzeigegeräts begrenzt bzw. umschließt, werden von dem mindestens einen Lichtleitstrukturmodul auf die bzw. dieselbe mindestens eine Linie der Deckscheibe projiziert, die zu dem mindestens einen gemeinsamen Abschnitt der zweiten äußeren Ränder beider sichtbarer Rahmen der Anzeigefelder beider in der Regel unmittelbar benachbarter Anzeigegeräte parallel ist.

In Ausgestaltung des Verfahrens ist vorgesehen, dass jedem der Anzeigegeräte ein Lichtleitstrukturmodul zugeordnet ist, wobei Anzeigeinhalte von jeweils zwei in der Regel unmittelbar benachbarten Anzeigegeräten durch die Lichtleitstrukturmodule, die diesen beiden Anzeigegeräten zugeordnet sind, zu dem gemeinsamen Anzeigeinhalt verbunden werden.

Außerdem werden die Anzeigeinhalte der zwei in der Regel unmittelbar benachbarten Anzeigegeräte von den Lichtleitstrukturmodulen entlang der mindestens einen gemeinsamen Linie zu dem gemeinsamen Anzeigeinhalt verbunden, wobei der mindestens eine gemeinsame Abschnitt des zweiten äußeren Rands des sichtbaren Rahmens und die mindestens eine Linie der Deckscheibe zueinander parallel sind.

Wie bereits voranstehend beschrieben, ist es möglich, dass jedem der Anzeigegeräte des Anzeigesystems ein üblicherweise pyramidenstumpfförmiges Lichtleitstrukturmodul zugeordnet ist. Dabei ist es in Ausgestaltung des Verfahrens möglich, dass einzelne Anzeigeinhalte von jeweils zwei in der Regel unmittelbar benachbarten Anzeigegeräten durch die Lichtleitstrukturmodule, die diesen beiden Anzeigegeräten zugeordnet sind, zu dem gemeinsamen Anzeigeinhalt verbunden und somit fusioniert werden.

Diesbezüglich ist es weiterhin möglich, dass die Anzeigeinhalte der zwei in der Regel unmittelbar benachbarten Anzeigegeräte von den Lichtleistrukturmodulen entlang einer üblicherweise gemeinsamen Linie auf mindestens einer der Oberflächen der Deckscheibe, d. h. der inneren und/oder äußeren Oberfläche, die zu einem gemeinsamen Abschnitt der zweiten äußeren Ränder der zwei in der Regel unmittelbar benachbarten Anzeigegeräte zu dem gemeinsamen Anzeigeinhalt verbunden werden, wobei der gemeinsame Abschnitt und die mindestens eine Linie der Deckscheibe zueinander parallel sind.

In Ausgestaltung ist es möglich, dass das Anzeigesystem mehrere Anzeigegeräte umfasst, wobei jedes Anzeigegerät ein von einem sichtbaren Rahmen umschlossenes Anzeigefeld aufweist, auf dem ein Lichtleitstrukturmodul angeordnet ist. Mit den mehreren Lichtleitstrukturmodulen des Anzeigesystems werden einzelne Anzeigeinhalte von Anzeigefeldern der Anzeigegeräte zu einem für alle Anzeigegeräte gemeinsamen Anzeigeinhalt verbunden. Dabei werden die einzelnen Anzeigeinhalte in der Regel unmittelbar benachbarter Anzeigegeräte entlang der gemeinsamen Linie auf der Deckscheibe von den Lichtleitstrukturmodulen zu dem gemeinsamen Anzeigeinhalt zusammengesetzt. Somit ist es möglich, mehrere Anzeigeinhalte der mehreren Anzeigegeräte zu dem gemeinsamen Anzeigeinhalt zusammenzusetzen. Dabei werden die Rahmen, die die Anzeigeflächen der Anzeigegeräte umschließen, von den Lichtleitstrukturmodulen ausgeblendet.

Mit dem Anzeigesystem wird eine Displayanordnung bereitgestellt, bei der Displays bzw. Monitore und somit Anzeigefelder bzw. Bildschirme von mindestens zwei Anzeigegeräten fusioniert werden.

Das Anzeigesystem ist bspw. in einem Fahrzeug integrierbar und wird üblicherweise als designerisches Element verwendet. Mit dem Anzeigesystem ist es möglich, mehrere Anzeigefelder randlos darzustellen. Außerdem ist es möglich, Anzeigeinhalte von einzelnen Anzeigefeldern zu einem größeren gemeinsamen Anzeigeinhalt auf der Deckscheibe des Anzeigesystems zusammenzusetzen.

In der Regel werden zum Bereitstellen des Anzeigesystems mehrere einzelne Anzeigegeräte modular zusammengesetzt, wobei es vorgesehen ist, Anzeigegeräte zu verwenden, deren Anzeigefelder jeweils durch Rahmen umschlossen sind. Dabei ist es möglich, gleichartig ausgebildete Anzeigegeräte für ein Anzeigesystem, die dieselben Abmessungen aufweisen, mehrfach einzusetzen.

Mit dem Anzeigesystem werden Anzeigeinhalte von in der Regel unmittelbar benachbart angeordneten Anzeigegeräten nahtlos zusammengesetzt. In Ausgestaltung ist auf jedem Anzeigegerät zwischen dem jeweiligen Anzeigegerät und der Deckscheibe ein Lichtleitstrukturmodul angeordnet. Dabei ist vorgesehen, dass die erste Außenseite des bspw. pyramidenstumpfförmigen Körpers eines jeweiligen Lichtleitstrukturmoduls lediglich das Anzeigefeld des jeweiligen Anzeigegeräts berührt und/oder auf diesem Anzeigefeld angeordnet ist. In der Regel ist jedem Anzeigefeld eine Fläche der Deckscheibe zugeordnet, wobei diese Fläche der Deckscheibe durch mindestens eine Linie begrenzt ist, wobei der mindestens eine Abschnitt des äußeren Rands des sichtbaren Rahmens des jeweiligen Anzeigegeräts, der dessen Anzeigefeld umschließt, und die mindestens eine Linie der Deckscheibe zueinander parallel sind. Bei einer Ausführungsform des Verfahrens mit dem vorgestellten Anzeigesystem ist es somit möglich, den Anzeigeinhalt des Anzeigefelds des jeweiligen Anzeigegeräts komplett auf die ihm zugeordnete Fläche der Deckscheibe zu projizieren.

Mit einem Lichtleitstrukturmodul eines jeweiligen Anzeigefelds bzw. Anzeigegeräts wird dessen Anzeigeinhalt vergrößert, wobei ein daraus resultierender vergrößerter Anzeigeinhalt hinsichtlich seiner Größe bzw. Fläche über eine mechanisch festgelegte Größe bzw. Fläche des Anzeigefelds hinausgeht.

Mit dem Verfahren werden mehrere Anzeigeinhalte mehrerer kleinerer Anzeigefelder jeweiliger Anzeigegeräte nahtlos zu einem vergrößerten gemeinsamen Anzeigefeld zusammengesetzt.

Weitere Vorteile und Ausgestaltungen der Erfindung ergeben sich aus der Beschreibung und der beiliegenden Zeichnung.

Die Erfindung ist anhand einer Ausführungsform in den Zeichnungen schematisch dargestellt und wird unter Bezugnahme auf die Zeichnungen schematisch und ausführlich beschrieben.
Figur 1 zeigt in schematischer Darstellung Details einer aus dem Stand der Technik bekannten Displayanordnung, die mehrere Anzeigefelder umfasst, aus unterschiedlichen Perspektiven.
Figur 2 zeigt in schematischer Darstellung eine Ausführungsform des erfindungsgemäßen Anzeigesystems aus unterschiedlichen Perspektiven.

Die Figuren werden zusammenhängend und übergreifend beschrieben. Gleichen Bezugsziffern sind dieselben Komponenten zugeordnet.

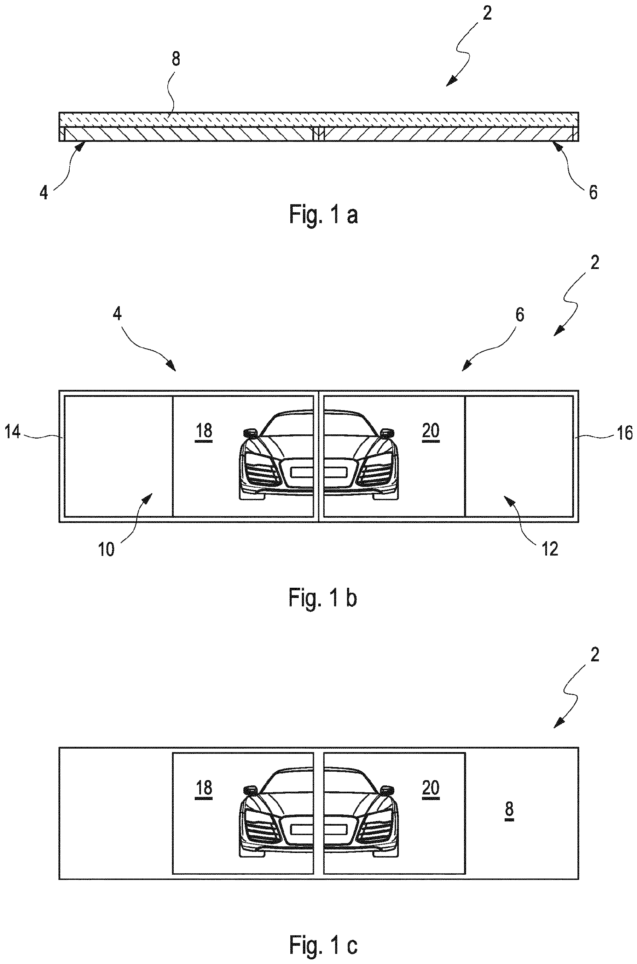

Die aus dem Stand der Technik bekannte Displayanordnung 2 ist in Figur 1a in Schnittansicht sowie in den Figuren 1b und 1c jeweils von oben dargestellt. Dabei umfasst diese Displayanordnung 2 ein erstes Anzeigegerät 4 und ein zweites Anzeigegerät 6, die hier unmittelbar nebeneinander angeordnet sind. Außerdem ist auf diesen beiden Anzeigefeldern 4, 6 eine Deckscheibe 8 angeordnet. Jedes dieser beiden Anzeigefelder 4, 6 umfasst ein aktives Anzeigefeld 10, 12, wobei jeweils ein derartiges aktives Anzeigefeld 10, 12 von einem Rahmen 14, 16 umschlossen ist.

Dabei ist hier vorgesehen, dass auf jeweils einem Anzeigefeld 10, 12 ein Anzeigeinhalt 18, 20 dargestellt wird, wobei ein erster Anzeigeinhalt 18 eines ersten Anzeigefelds 10 des ersten Anzeigegeräts hier einen ersten Teil eines Fahrzeugs zeigt. Ein zweiter Anzeigeinhalt 20 des zweiten Anzeigefelds 12 des zweiten Anzeigegeräts 6 zeigt einen zweiten Teil dieses Fahrzeugs.

Wie Figur 1c zeigt, sind die beiden Anzeigeinhalte 18, 20 bei einer Betrachtung der Displayanordnung 2 durch die Rahmen 14, 16, die die Anzeigefelder 10, 12 der Anzeigegeräte 4, 6 umschließen, auch bei einer Betrachtung durch die Deckscheibe 8 voneinander getrennt.

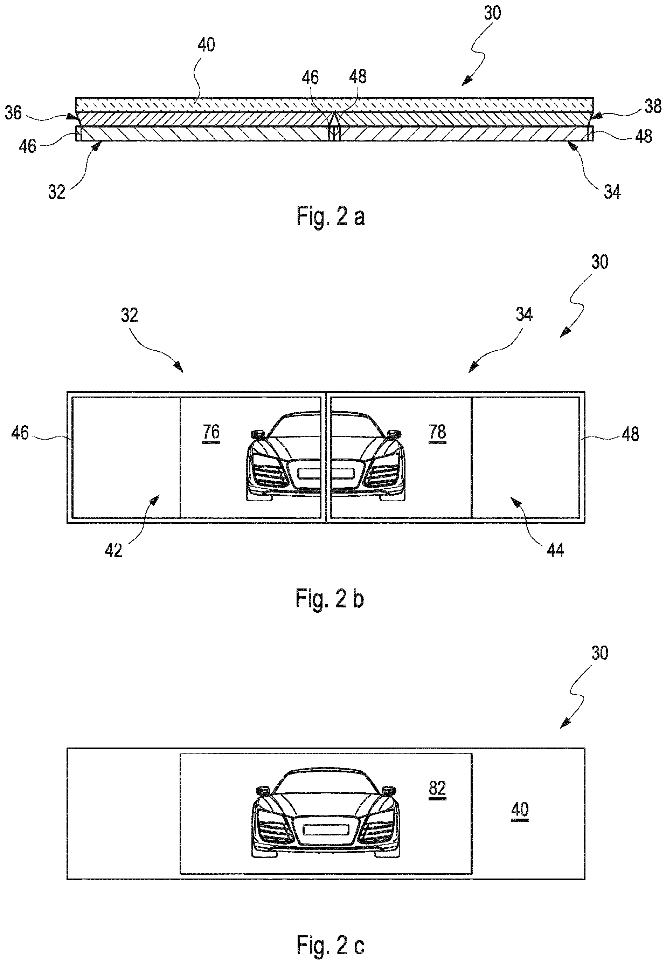

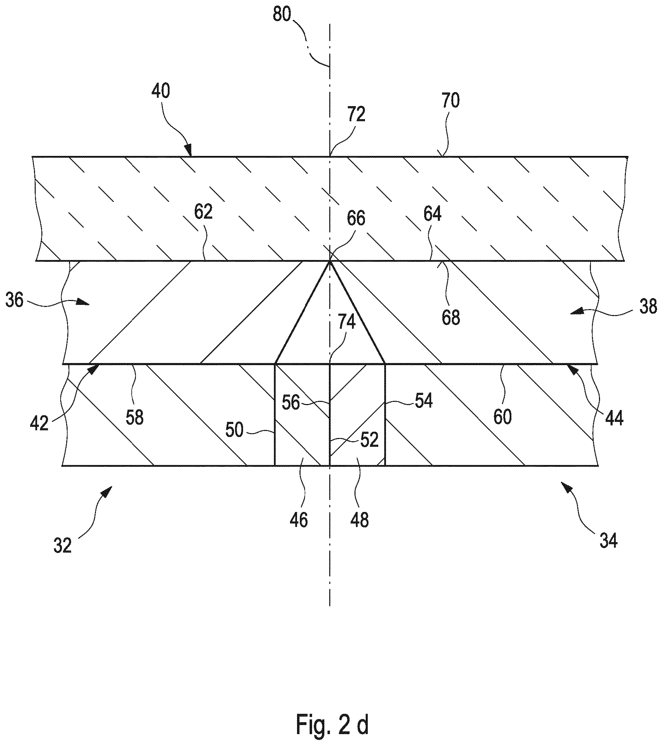

Die Ausführungsform des in Figur 2 schematisch dargestellten, erfindungsgemäßen Anzeigesystems 30 umfasst ein erstes Anzeigegerät 32 und ein zweites Anzeigegerät 34, zwei Lichtleitstrukturmodule 36, 38 und eine Deckscheibe 40.

Dieses Anzeigesystem 30 ist in Figur 2a in einer Schnittansicht schematisch dargestellt.

Figur 2b zeigt die beiden Anzeigegeräte 32, 34 des Anzeigesystems 30 in einer schematischen Darstellung von oben.

Figur 2c zeigt ein Erscheinungsbild, das für einen Betrachter bei Durchführung einer Ausführungsform des erfindungsgemäßen Verfahrens durch das Anzeigesystem 30 dargestellt wird, in schematischer Darstellung.

Weiterhin zeigt Figur 2d ein Detail aus Figur 2a in schematischer Darstellung in einem Bereich, in dem die Anzeigegeräte 32, 34 und die Lichtleitstrukturmodule 36, 38 aneinandergrenzen.

Es ist vorgesehen, dass die beiden Anzeigegeräte 32, 34 hier unmittelbar nebeneinander angeordnet sind. Jedes Anzeigegerät 32, 34 umfasst ein hier aktives Anzeigefeld 42, 44, das von einem Rahmen 46, 48 umschlossen ist. Wobei ein jeweiliger Rahmen 46, 48 ebenfalls ein jeweiliges Anzeigegerät 32, 34 umschließt und/oder als Komponente des jeweiligen Anzeigegeräts 32, 34 ausgebildet ist.

Wie Figur 2d zeigt, weist ein Rahmen 46 des ersten Anzeigegeräts 32 einen inneren Rand 50 und einen äußeren Rand 52 auf. Dabei umschließt und/oder begrenzt der innere Rand 50 das Anzeigefeld 42 des ersten Anzeigegeräts 32. Der äußere Rand 52 des Rahmens 46, der zu dem ersten Rand 50 parallel angeordnet ist, begrenzt und/oder umschließt hier den Rahmen 46, hier in Ausgestaltung eine äußere Kante des Rahmens 46 des ersten Anzeigegeräts 32.

Entsprechend weist der Rahmen 48 des zweiten Anzeigegeräts 34 ebenfalls einen inneren Rand 54 und einen äußeren Rand 56 auf, wobei der innere Rand 54 das Anzeigefeld 44 des ersten Anzeigegeräts 34 umschließt und/oder begrenzt. Der äußere Rand 56 umschließt hierbei weiterhin den Rahmen 48 des ersten Anzeigegeräts 34 sowie dessen äußere Kante.

Die Rahmen 46, 48 beider Anzeigegeräte 32, 34 sind somit jeweils durch einen inneren Rand 50, 54 und einen äußeren Rand 52, 56 begrenzt, wobei die inneren Ränder 50, 54 zu den entsprechend äußeren Rändern 52, 56 jeweils eines Rahmens 46, 48 gerade und jeweils zueinander parallel angeordnet sind.

Jedes der beiden Lichtleitstrukturmodule 36, 38 weist in der Ausführungsform des Anzeigesystems 30 einen pyramidenstumpfförmigen Körper auf, wobei jedes Lichtleitstrukturmodul 36, 38 im Querschnitt trapezförmig ausgebildet ist (Figur 2a). Wie Figur 2d im Detail zeigt, weist jedes Lichtleitstrukturmodul 36, 38 eine erste Außenseite 58, 60 sowie eine zweite Außenseite 62, 64 auf. Hierbei ist vorgesehen, dass jeweils eine erste Außenseite 58, 60 eines jeweiligen Lichtleitstrukturmoduls 36, 38 zu einem Anzeigefeld 42, 44 eines Anzeigegeräts 32, 34 deckungsgleich ist, d. h. dieselben Abmessungen wie das jeweilige Anzeigefeld 42, 44 aufweist sowie auch deckungsgleich auf diesem jeweiligen Anzeigefeld 42, 44 angeordnet ist.

Auf den zweiten Außenseiten 62, 64 beider Lichtleitstrukturmodule 36, 38 ist die Deckscheibe 40 angeordnet, wobei sich Kanten der zweiten Außenseiten 62, 64 entlang einer gemeinsamen Linie 66 berühren, wobei diese gemeinsame Linie 66 zugleich einer inneren Oberfläche 68 der Deckscheibe 40 zugeordnet ist und/oder für die Deckscheibe 40 definiert wird, wobei die beiden zweiten Außenseiten 62, 64 der beiden Lichtleitstrukturmodule 36, 38 diese innere Oberfläche 68 der Deckscheibe 40 berühren. Außerdem weist diese Deckscheibe 40 eine äußere Oberfläche 70 auf, für die hier eine Linie 72 definiert ist, wobei diese Linie 72 und die Linie 66 zwischen den Kanten der beiden zweiten Außenseiten 62, 64 der beiden Lichtleitstrukturmodule 36, 38 bzw. auf der inneren Oberfläche 68 zueinander parallel und durch eine senkrecht zu der Deckscheibe 40 orientierte Achse 80 verbunden sind, wobei die äußere Oberfläche 70 sowie die Linie 66 auf der inneren Oberfläche 68 der Deckscheibe 40 von den Lichtleitstrukturmodulen 36, 38 abgewandt ist. Außerdem ist vorgesehen, dass diese Linie 72 auf der äußeren Oberfläche 70 der Deckscheibe 40 angeordnet ist. Außerdem ist hier ein gemeinsamer geradenförmiger Abschnitt 74 der beiden äußeren Ränder 52, 56 der Rahmen 46, 48, die die Anzeigefelder 42, 44 der Anzeigegeräte 32, 34 umschließen, vorgesehen, der die Linie 72 durch Parallelprojektion entlang der Achse 80 definiert. Dabei ist hier vorgesehen, dass dieser gemeinsame Abschnitt 74 mittig zwischen den beiden parallel verlaufenden äußeren Rändern 52, 56 der Rahmen 46, 48 angeordnet ist und/oder auf diesen beiden äußeren Rändern 52, 56 verläuft. Dabei grenzen die beiden äußeren Rändern 52, 56 an dem gemeinsamen Abschnitt 74 aneinander, wobei der gemeinsame Abschnitt 74 beiden äußeren Rändern 52, 56 zugeordnet und/oder hierfür definiert ist.

Falls die beiden Anzeigegeräte 32, 34 unmittelbar bzw. direkt nebeneinander angeordnet werden, berühren sich auch die beiden Rahmen 46, 48 entlang ihrer äußeren Ränder 52, 56 entlang des gemeinsamen Abschnitts 74 nahtlos.

Wie Figur 2b zeigt, wird auf dem ersten Anzeigefeld 42 des ersten Anzeigegeräts 32 als erster Anzeigeinhalt 76 ein erstes Teilbild eines Fahrzeugs dargestellt. Auf dem Anzeigefeld 44 des zweiten Anzeigegeräts 34 wird als zweiter Anzeigeinhalt 78 ein zweites Teilbild dieses Fahrzeugs dargestellt. Bei der Ausführungsform des Verfahrens werden die beiden inneren Ränder 50, 54 der beiden Rahmen 46, 48, die die beiden Anzeigefelder 42, 44 umschließen, auf die gemeinsame Linie 66 der inneren Oberfläche 68 der Deckscheibe 40 und weiterhin auch auf die Linie 72 auf der äußeren Oberfläche 68 der Deckscheibe 40 projiziert. Dabei wird jeweils ein Anzeigeinhalt 76, 78 eines Anzeigefelds 42, 44 durch jeweils ein Lichtleitstrukturmodul 36, 38 vergrößert. Weiterhin werden dabei die beiden Anzeigeinhalte 76, 78 zu einem gemeinsamen Anzeigeinhalt 82 zusammengesetzt und/oder fusioniert, wobei die beiden einzelnen Anzeigeinhalte 76, 78 unter Ausblendung der Rahmen 46, 48 miteinander nahtlos verbunden werden (Figur 2c). Dieser gemeinsame Anzeigeinhalt 82 zeigt das durch die beiden Anzeigefelder 42, 44 jeweils nur getrennt und/oder teilweise darstellbare Fahrzeug nun komplett.

## Patentansprüche

1. Anzeigesystem, das mindestens ein Anzeigegerät (32, 34) und eine Deckscheibe (40) aufweist, wobei das mindestens eine Anzeigegerät (32, 34) ein Anzeigefeld (42, 44) zum Darstellen eines Anzeigeinhalts (76, 78) umfasst, wobei das Anzeigefeld (42, 44) von einem sichtbaren Rahmen (46, 48) umschlossen ist, wobei der sichtbare Rahmen (46, 48) einerseits von einem inneren Rand (50, 54) und andererseits von einem äußeren Rand (52, 56) begrenzt ist, **dadurch gekennzeichnet, dass**
das Anzeigesystem weiterhin mindestens ein Lichtleitstrukturmodul (36, 38) aufweist, wobei das mindestens eine Lichtleitstrukturmodul (36, 38) zwischen dem mindestens einen Anzeigegerät (32, 34) und der Deckscheibe (40) angeordnet ist, wobei mindestens ein Abschnitt des äußeren Rands (52, 56) des sichtbaren Rahmens (46, 48) auf der Deckscheibe (40) durch Parallelprojektion entlang einer senkrecht zu der Deckscheibe (40) orientierten Achse (80) mindestens eine Linie (66, 72) definiert, wobei das mindestens eine Lichtleitstrukturmodul (36, 38) dazu ausgebildet ist, den Anzeigeinhalt (76, 78) des mindestens einen Anzeigegeräts (32, 34) zu vergrößern und einen Abschnitt des inneren Rands (50, 54) des sichtbaren Rahmens (46, 48) auf die mindestens eine definierte Linie (66, 72) der Deckscheibe (40) zu projizieren.

2. Anzeigesystem nach Anspruch 1, das mehrere Anzeigegeräte (32, 34) aufweist, wobei für zwei benachbarte Anzeigegeräte (32, 34) vorgesehen ist, dass mindestens ein Abschnitt eines äußeren Rands (52) eines sichtbaren Rahmens (46), der ein Anzeigefeld (42) eines ersten Anzeigegeräts (32) umschließt, und mindestens ein Abschnitt eines äußeren Rands (56) eines sichtbaren Rahmens (48), der ein Anzeigefeld (44) eines zweiten Anzeigegeräts (34) umschließt, an mindestens einem gemeinsamen Abschnitt (74) aneinandergrenzen, wobei dieser mindestens eine gemeinsame Abschnitt (74) die mindestens eine Linie (66, 72) der Deckscheibe (40) durch Parallelprojektion entlang der senkrecht zu der Deckscheibe (40) orientierten Achse (80) definiert, wobei das mindestens eine Lichtleitstrukturmodul (36, 38) dazu ausgebildet ist, den mindestens einen Abschnitt des inneren Rands (50) des sichtbaren Rahmens (46), der das Anzeigefeld (42) des ersten Anzeigegeräts (32) begrenzt, und den mindestens einen Abschnitt des inneren Rands (54), der das Anzeigefeld (44) des zweiten Anzeigegeräts (34) begrenzt, auf die mindestens eine definierte Linie (66, 72) der Deckscheibe (40) zu projizieren.

3. Anzeigesystem nach Anspruch 1 oder 2, bei dem der mindestens eine Abschnitt des äußeren Rands des sichtbaren Rahmens (46, 48), der das mindestens eine Anzeigefeld (42, 44) umschließt, und mindestens eine Linie der Deckscheibe (40), die entlang einer Kante der Deckscheibe (40) verläuft, zueinander parallel sind, wobei das mindestens eine Lichtleitstrukturmodul (36, 38) dazu ausgebildet ist, den mindestens einen Abschnitt des inneren Rands des sichtbaren Rahmens (46, 48), der das Anzeigefeld (42, 44) des mindestens einen Anzeigegeräts (32, 34) begrenzt und der dem mindestens einen Abschnitt des äußeren Rands des sichtbaren Rahmens (46, 48) zugeordnet ist, auf die mindestens eine Linie entlang der Kante der Deckscheibe (40) zu projizieren.

4. Anzeigesystem nach einem der voranstehenden Ansprüche, bei dem jedem Anzeigegerät (32, 34) ein Lichtleitstrukturmodul (36, 38) zugeordnet ist.

5. Anzeigesystem nach einem der voranstehenden Ansprüche, bei dem das mindestens eine Lichtleitstrukturmodul (36, 38) zwischen dem mindestens einen Anzeigegerät (32, 34) und der Deckscheibe (40) einen Körper mit einer ersten Außenseite (58, 60), die dem mindestens einen Anzeigegerät (32, 34) zugewandt ist, und einer zweiten Außenseite (62, 64), die der Deckscheibe (40) zugewandt ist, aufweist, wobei die beiden Außenseiten (58, 60, 62, 64) zueinander parallel angeordnet sind, wobei die erste Außenseite (58, 60) eine kleinere Fläche als die zweite Außenseite (62, 64) aufweist, wobei mindestens ein Abschnitt mindestens einer Kante der ersten Außenseite (58, 60) des mindestens einen Lichtleitstrukturmoduls (36, 38) dem mindestens einen Abschnitt des mindestens eines inneren Rands (50, 54) des sichtbaren Rahmens (46, 48) des Anzeigefelds (42, 44) des mindestens einen Anzeigegeräts (32, 34) zugeordnet ist, wobei die erste Außenseite (58, 60) des mindestens einen Lichtleitstrukturmoduls (36, 38) dem Anzeigefeld (42, 44) des mindestens einen Anzeigegeräts (32, 34) zugeordnet ist, wobei die erste Außenseite (58, 60) und das Anzeigefeld (42, 44) des mindestens einen Anzeigegeräts (32, 34) deckungsgleich sind, wobei mindestens ein Abschnitt mindestens einer Kante der zweiten Außenseite des mindestens einen Lichtleitstrukturmoduls (36, 38) der mindestens einen Linie (66, 72) der Deckscheibe (40) zugeordnet ist, wobei der mindestens eine Abschnitt des äußeren Rands (52, 56) des sichtbaren Rahmens (46, 48) die mindestens eine Linie (66, 72) der Deckscheibe (40) durch Parallelprojektion entlang der senkrecht zu der Deckscheibe (40) orientierten Achse (80) definiert, wobei der sichtbare Rahmen (46, 48) von demselben mindestens einen Abschnitt des inneren Rands (50, 54) begrenzt ist, der dem mindestens einen Abschnitt der ersten Kante der ersten Außenseite (62, 64) des mindestens einen Lichtleitstrukturmoduls (36, 38) zugeordnet ist.

6. Anzeigesystem nach einem der voranstehenden Ansprüche, bei dem das mindestens eine Anzeigegerät (32, 34) ein n-eckiges Anzeigefeld (42, 44) zum Darstellen eines Anzeigeinhalts (76, 78) umfasst, wobei der innere Rand des sichtbaren Rahmens und der äußere Rand des sichtbaren Rahmens, die zueinander parallel angeordnet sind, ebenfalls n-eckig ausgebildet sind.

7. Anzeigesystem nach Anspruch 5 und 6, bei dem das mindestens eine Lichtleitstrukturmodul (36, 38) zwischen dem mindestens einen Anzeigegerät (32, 34) und der Deckscheibe (40) einen pyramidenstumpfförmigen Körper aufweist.

8. Anzeigesystem nach einem der voranstehenden Ansprüche, das in einem Fahrzeug einsetzbar und an einer Innenwand in einem Innenraum des Fahrzeugs anordenbar ist.

9. Verfahren zum Darstellen mindestens eines Anzeigeinhalts (76, 78, 82) mit einem Anzeigesystem (30), das mindestens ein Anzeigegerät (32, 34) und eine Deckscheibe (40) aufweist, wobei das mindestens eine Anzeigegerät (32, 34) ein Anzeigefeld (42, 44) zum Darstellen eines Anzeigeinhalts (76, 78) umfasst, wobei das Anzeigefeld (42, 44) von einem sichtbaren Rahmen (46, 48) umschlossen ist, wobei der sichtbare Rahmen (46, 48) einerseits von einem inneren Rand (50, 54) und andererseits von einem äußeren Rand (52, 56) begrenzt ist, **dadurch gekennzeichnet, dass** das Anzeigesystem weiterhin mindestens ein Lichtleitstrukturmodul (36, 38) aufweist, wobei das mindestens eine Lichtleitstrukturmodul (36, 38) zwischen dem mindestens einen Anzeigegerät (32, 34) und der Deckscheibe (40) angeordnet ist, wobei mindestens ein Abschnitt des äußeren Rands (52, 56) des sichtbaren Rahmens (46, 48) auf der Deckscheibe (40) durch Parallelprojektion entlang einer senkrecht zu der Deckscheibe (40) orientierten Achse (80) mindestens eine Linie (66, 72) definiert, wobei der Anzeigeinhalt (76, 78) des mindestens einen Anzeigegeräts (32, 34) von dem mindestens einen Lichtleitstrukturmodul (36, 38) vergrößert und der mindestens eine Abschnitt des inneren Rands (50, 54) des sichtbaren Rahmens (46, 48) auf die mindestens eine Linie (66, 72) der Deckscheibe (40) projiziert wird.

10. Verfahren nach Anspruch 9 zum Darstellen eines für mindestens zwei Anzeigegeräte (32, 34) vorgesehenen gemeinsamen Anzeigeinhalts (82), wobei für zwei benachbarte Anzeigegeräte (32, 34) vorgesehen wird, dass mindestens ein Abschnitt eines äußeren Rands (56) eines sichtbaren Rahmens (48), der ein Anzeigefeld (42) eines ersten Anzeigegeräts (32) umschließt, und mindestens ein Abschnitt eines äußeren Rands (52, 56) eines sichtbaren Rahmens (48), der ein Anzeigefeld (44) eines zweiten Anzeigegeräts (34) umschließt, an mindestens einem gemeinsamen Abschnitt (74) aneinandergrenzen, wobei der mindestens eine Abschnitt des äußeren Rands (52, 56) des sichtbaren Rahmens (46, 48) die mindestens eine Linie (66, 72) der Deckscheibe (40) durch Parallelprojektion entlang der senkrecht zu der Deckscheibe (40) orientierten Achse (80) definiert, wobei der mindestens eine Abschnitt des inneren Rands (50) des sichtbaren Rahmens (46), der das Anzeigefeld (42) des ersten Anzeigegeräts (32) begrenzt, und der mindestens eine Abschnitt des inneren Rands (54), der das Anzeigefeld (44) des zweiten Anzeigegeräts (34) begrenzt, von dem mindestens einen Lichtleitstrukturmodul (36, 38) auf die mindestens eine Linie (66, 72) der Deckscheibe (40) projiziert werden, wobei der mindestens eine gemeinsame Abschnitt (74) der zwei äußeren Ränder (52, 56) beider sichtbarer Rahmen (46, 48) der Anzeigefelder (42, 44) beider benachbarter Anzeigegeräte (32, 34) und die mindestens eine Linie (66, 72) der Deckscheibe (40) zueinander parallel sind.

11. Verfahren nach Anspruch 10, bei dem jedem der Anzeigegeräte (32, 34) ein Lichtleitstrukturmodul (36, 38) zugeordnet ist, wobei Anzeigeinhalte (76, 78) der zwei benachbarten Anzeigegeräten (32, 34) durch die Lichtleitstrukturmodule (36, 38), die diesen beiden Anzeigegeräten (32, 34) zugeordnet sind, zu dem gemeinsamen Anzeigeinhalt (82) verbunden werden.

12. Verfahren nach Anspruch 11, bei dem die Anzeigeinhalte (76, 78), der zwei benachbarten Anzeigegeräte (32, 34) von den Lichtleitstrukturmodulen (36, 38) entlang der mindestens einen Linie (66, 72) der Deckscheibe (40) zu dem gemeinsamen Anzeigeinhalt (82) verbunden werden, wobei der gemeinsame Abschnitt (74) der zwei äußeren Ränder (52, 56) der zwei benachbarten Anzeigegeräte (32, 34) und die mindestens eine Linie (66, 72) der Deckscheibe (40) zueinander parallel sind.

## Claims

1. Display system, which has at least one display device (32, 34) and a cover plate (40), wherein the at least one display device (32, 34) comprises a display field (42, 44) for representing a display content (76, 78), wherein the display field (42, 44) is surrounded by a visible frame (46, 48), wherein the visible frame (46, 48) is delimited on the one hand by an inner edge (50, 54) and on the other hand by an outer edge (52, 56), **characterised in that** the display system also has at least one light-guide structure module (36, 38), wherein the at least one light-guide structure module (36, 38) is arranged between the at least one display device (32, 34) and the cover plate (40), wherein at least one section of the outer edge (52, 56) of the visible frame (46, 48) on the cover plate (40) defines at least one line (66, 72) by parallel projection along an axis (80) oriented perpendicular to the cover plate (40), wherein the at least one light-guide structure module (36, 38) is designed to enlarge the display content (76, 78) of the at least one display device (32, 34) and to project a section of the inner edge (50, 54) of the visible frame (46, 48) onto the at least one defined line (66, 72) of the cover plate (40).

2. Display system according to claim 1, which has a plurality of display devices (32, 34), wherein for two adjacent display devices (32, 34) it is provided that at least one section of an outer edge (52) of a visible frame (46), which surrounds a display field (42) of a first display device (32), and at least one section of an outer edge (56) of a visible frame (48), which surrounds a display field (44) of a second display device (34), are adjacent to one another on at least one common section (74), wherein said at least one common section (74) defines the at least one line (66, 72) of the over plate (40) by parallel projection along the axis (80) oriented perpendicular to the cover plate (40), wherein the at least one light-guide structure module (36, 38) is designed to project the at least one section of the inner edge (50) of the visible frame (46), which defines the display field (42) of the first display device (32), and the at least one section of the inner edge (54), which defines the display field (44) of the second display device (34), onto the at least one defined line (66, 72) of the cover plate (40).

3. Display system according to claim 1 or 2, wherein the at least one section of the outer edge of the visible frame (46, 48), which encloses the at least one display field (42, 44), and at least one line of the cover plate (40), which runs along an edge of the cover plate (40), are parallel to one another, wherein the at least one light-guide structure module (36, 38) is designed to project the at least one section of the inner edge of the visible frame (46, 48), which defines the display field (42, 44) of the at least one display device (32, 34), and which is assigned to the at least one section of the outer edge of the visible frame (46, 48), onto the at least one line along the edge of the cover plate (40).

4. Display system according to any of the preceding claims, wherein a light-guide structure module (36, 38) is assigned to each display device (32, 34).

5. Display system according to any of the preceding claims, wherein the at least one light-guide structure module (36, 38) between the at least one display device (32, 34) and the cover plate (40) has a body with a first outer side (58, 60) which faces the at least one display device (32, 34), and a second outer side (62, 64), which faces the cover plate (40), wherein the two outer sides (58, 60, 62, 64) are arranged parallel to one another, wherein the first outer side (58, 60) has smaller area than the second outer side (62, 64), wherein at least one section of at least one edge of the first outer side (58, 60) of the at least one light-guide structure module (36, 38) is assigned to the at least one section of the at least one inner edge (50, 54) of the visible frame (46, 48) of the display field (42, 44) of the at least one display device (32, 34), wherein the first outer side (58, 60) of the at least one light-guide structure module (36, 38) is assigned to the display field (42, 44) of the at least one display device (32, 34), wherein the first outer side (58, 60) and the display field (42, 44) of the at least one display device (32, 34) are congruent, wherein at least one section of at least one edge of the second outer side of the at least one light-guide structure module (36, 38) is assigned to the at least one line (66, 72) of the cover plate (40), wherein the at least one section of the outer edge (52 56) of the visible frame (46, 48) defines the at least one line (66, 72) of the cover plate (40) by parallel projection along the axis (80) oriented perpendicular to the cover plate (40), wherein the visible frame (46, 48) is delimited by the same at least one section of the inner edge (50, 54), which is assigned to the at least one section of the first edge of the first outer site (62, 64) of the at least one light-guide structure module (36, 38).

6. Display system according to any of the preceding claims, wherein the at least one display device (32, 34) comprises an n-cornered display field (42, 44) for representing a display content (76, 78), wherein the inner edge of the visible frame and the outer edge of the visible frame, which are arranged parallel to one another, are also designed to be n-cornered.

7. Display system according to claim 5 and 6, wherein the at least one light-guide structure module (36, 38) has a body in a shape of a truncated pyramid between the at least one display device (32, 34) and the cover plate (40).

8. Display system according to any of the preceding claims, which can be inserted into a vehicle and can be arranged on an inner wall in an interior space of the vehicle.

9. Method for representing a display content (76, 78, 82) with a display system (30) which has at least one display device (32, 34) and a cover plate (40), wherein the at least one display device (32, 24) comprises a display field (42, 44) for representing a display content (76, 78), wherein the display field (42, 44) is surrounded by a visible frame (46, 48), wherein the visible frame (46, 48) is defined on the one hand by an inner edge (50, 54) and on the other hand by an outer edge (52, 56), **characterised in that** the display system also has at least one light-guide structure module (36, 38), wherein the at least one light-guide structure module (36, 38) is arranged between the at least one display device (32, 34) and the cover plate (40), wherein at least one section of the outer edge (52, 56) of the visible frame (46, 48) on the cover plate (40) defines at least one line (66, 72) by parallel projection along an axis (80) oriented perpendicular to the cover plate (40), wherein the display content (76, 78) of the at least one display device (32, 34) is enlarged by the at least one light-guide structure module (36, 38) and the at least one section of the inner edge (50, 54) of the visible frame (46, 48) is projected onto the at least one line (66, 72) of the cover plate (40).

10. Method according to claim 9 for representing a common display content (82) provided for at least two display device (32, 34), wherein for two adjacent display devices (32, 34) at least one section of an outer edge (56) of a visible frame (48), which surrounds a display field (42) of a first display device (32), and at least one section of an outer edge (52, 56) of a visible frame (48), which surrounds a display field (44) of a second display device (34), are adjacent to at least one common section (74), wherein the at least one section of the outer edge (52, 56) of the visible frame (46, 48) defines the at least one line (66, 72) of the cover plate (40) by parallel projection along the axis (80) oriented perpendicular to the cover plate (40), wherein the at least one section of the inner edge (50) of the visible frame (46), which defines the display field (42) of the first display device (32), and the at least one section of the inner edge (54), which defines the display field (44) of the second display device (34), are projected by the at least one light-guide structure module (36, 38) onto the at least one line (66, 72) of the cover plate (40), wherein the at least one common section (74) of the two outer edges (52, 56) of both visible frames (46, 48) of the display fields (42, 44) of both adjacent display devices (32, 34) and the at least one line (66, 72) of the cover plate (40) are parallel to one another.

11. Method according to claim 10, wherein a light-guide structure module (36, 38) is assigned to each of the display devices (32, 34), wherein display contents (76, 78) of the two adjacent display devices (32, 34) are connected by the light-guide modules (36, 38), which are assigned to said two display devices (32, 34), to the common display content (82).

12. Method according to claim 11, wherein the display contents (76, 78) of the two adjacent display devices (32, 34) are connected by the light-guide modules (36, 38) along the at least one line (66, 72) of the cover plate (40) to the common display content (82), wherein the common section (74) of the two outer edges (52, 56) of the two adjacent display devices (32, 34) and the at least one line (66, 72) of the cover plate (40) are parallel to one another.

## Revendications

1. Système d'affichage, qui présente au moins un appareil d'affichage (32, 34) et une plaque de recouvrement (40), dans lequel l'au moins un appareil d'affichage (32, 34) comprend un champ d'affichage (42, 44) servant à représenter un contenu d'affichage (76, 78), dans lequel le champ d'affichage (42, 44) est entouré par un cadre visible (46, 48), dans lequel le cadre visible (46, 48) est délimité d'une part par un bord intérieur (50, 54) et d'autre part par un bord extérieur (52, 56), **caractérisé en ce que** le système d'affichage présente en outre au moins un module structural de guidage de lumière (36, 38), dans lequel l'au moins un module structural de guidage de lumière (36, 38) est disposé entre l'au moins un appareil d'affichage (32, 34) et la plaque de recouvrement (40), dans lequel au moins une partie du bord extérieur (52, 56) du cadre visible (46, 48) sur la plaque de recouvrement (40) définit, par projection parallèle le long d'un axe (80) orienté perpendiculairement à la plaque de recouvrement (40), au moins une ligne (66, 72), dans lequel l'au moins un module structural de guidage de lumière (36, 38) est réalisé pour agrandir le contenu d'affichage (76, 78) de l'au moins un appareil d'affichage (32, 34) et projeter une partie du bord intérieur (50, 54) du cadre visible (46, 48) sur l'au moins une ligne (66, 72) définie de la plaque de recouvrement (40).

2. Système d'affichage selon la revendication 1, qui présente plusieurs appareils d'affichage (32, 34), dans lequel, pour deux appareils d'affichage (32, 34) voisins, il est prévu qu'au moins une partie d'un bord extérieur (52) d'un cadre visible (46), qui entoure un champ d'affichage (42) d'un premier appareil d'affichage (32), et au moins une partie d'un bord extérieur (56) d'un cadre visible (48), qui entoure un champ d'affichage (44) d'un second appareil d'affichage (34), soient mutuellement contigües à au moins une partie commune (74), dans lequel cette au moins une partie commune (74) définit l'au moins une ligne (66, 72) de la plaque de recouvrement (40) par projection parallèle le long de l'axe (80) orienté perpendiculairement à la plaque de recouvrement (40), dans lequel l'au moins un module structural de guidage de lumière (36, 38) est réalisé pour projeter l'au moins une partie du bord intérieur (50) du cadre visible (46), qui délimite le champ d'affichage (42) du premier appareil d'affichage (32), et l'au moins une partie du bord intérieur (54), qui délimite le champ d'affichage (44) du second appareil d'affichage (34), sur l'au moins une ligne (66, 72) définie de la plaque de recouvrement (40).

3. Système d'affichage selon la revendication 1 ou 2, selon lequel l'au moins une partie du bord extérieur du cadre visible (46, 48), qui entoure l'au moins un champ d'affichage (42, 44), et au moins une ligne de la plaque de recouvrement (40), qui s'étend le long d'une arête de la plaque de recouvrement (40), sont parallèles l'une à l'autre, dans lequel l'au moins un module structural de guidage de lumière (36, 38) est réalisé pour projeter l'au moins une partie du bord intérieur du cadre visible (46, 48), qui délimite le champ d'affichage (42, 44) de l'au moins un appareil d'affichage (32, 34) et qui est associé à l'au moins une partie du bord extérieur du cadre visible (46, 48), sur l'au moins une ligne le long de l'arête de la plaque de recouvrement (40).

4. Système d'affichage selon l'une quelconque des revendications précédentes, pour lequel un module structural de guidage de lumière (36, 38) est associé à chaque appareil d'affichage (32, 34).

5. Système d'affichage selon l'une quelconque des revendications précédentes, pour lequel l'au moins un module structural de guidage de lumière (36, 38) présente entre l'au moins un appareil d'affichage (32, 34) et la plaque de recouvrement (40) un corps avec une première face extérieure (58, 60), qui est tournée vers l'au moins un appareil d'affichage (32, 34), et une seconde face extérieure (62, 64), qui est tournée vers la plaque de recouvrement (40), dans lequel les deux faces extérieures (58, 60, 62, 64) sont disposées parallèlement l'une à l'autre, dans lequel la première face extérieure (58, 60) présente une surface plus petite que la seconde face extérieure (62, 64), dans lequel au moins une partie d'au moins une arête de la première face extérieure (58, 60) de l'au moins un module structural de guidage de lumière (36, 38) est associée à l'au moins une partie de l'au moins un bord intérieur (50, 54) du cadre visible (46, 48) du champ d'affichage (42, 44) de l'au moins un appareil d'affichage (32, 34), dans lequel la première face extérieure (58, 60) de l'au moins un module structural de guidage de lumière (36, 38) est associée au champ d'affichage (42, 44) de l'au moins un appareil d'affichage (32, 34), dans lequel la première face extérieure (58, 60) et le champ d'affichage (42, 44) de l'au moins un appareil d'affichage (32, 34) sont coïncidents, dans lequel au moins une partie d'au moins une arête de la seconde face extérieure de l'au moins un module structural de guidage de lumière (36, 38) est associée à l'au moins une ligne (66, 72) de la plaque de recouvrement (40), dans lequel l'au moins une partie du bord extérieur (52, 56) du cadre visible (46, 48) définit l'au moins une ligne (66, 72) de la plaque de recouvrement (40) par projection parallèle le long de l'axe (80) orienté perpendiculairement à la plaque de recouvrement (40), dans lequel le cadre visible (46, 48) est délimité par la même au moins une partie du bord intérieur (50, 54), qui est associée à l'au moins une partie de la première arête de la première face extérieure (62, 64) de l'au moins un module structural de guidage de lumière (36, 38).

6. Système d'affichage selon l'une quelconque des revendications précédentes, pour lequel l'au moins un appareil d'affichage (32, 34) comprend un champ d'affichage (42, 44) polygonal servant à représenter un contenu d'affichage (76, 78), dans lequel le bord intérieur du cadre visible et le bord extérieur du cadre visible, qui sont disposés parallèlement l'un à l'autre, sont également réalisés de manière polygonale.

7. Système d'affichage selon la revendication 5 et 6, pour lequel l'au moins un module structural de guidage de lumière (36, 38) présente entre l'au moins un appareil d'affichage (32, 34) et la plaque de recouvrement (40) un corps en forme de pyramide tronquée.

8. Système d'affichage selon l'une quelconque des revendications précédentes, qui peut être utilisé dans un véhicule et peut être disposé sur une paroi intérieure dans un espace intérieur du véhicule.

9. Procédé pour représenter au moins un contenu d'affichage (76, 78, 82) avec un système d'affichage (30), qui présente au moins un appareil d'affichage (32, 34) et une plaque de recouvrement (40), dans lequel l'au moins un appareil d'affichage (32, 34) comprend un champ d'affichage (42, 44) servant à représenter un contenu d'affichage (76, 78), dans lequel le champ d'affichage (42, 44) est entouré par un cadre visible (46, 48), dans lequel le cadre visible (46, 48) est délimité d'une part par un bord intérieur (50, 54) et d'autre part par un bord extérieur (52, 56), **caractérisé en ce que** le système d'affichage présente en outre au moins un module structural de guidage de lumière (36, 38), dans lequel l'au moins un module structural de guidage de lumière (36, 38) est disposé entre l'au moins un appareil d'affichage (32, 34) et la plaque de recouvrement (40), dans lequel au moins une partie du bord extérieur (52, 56) du cadre visible (46, 48) sur la plaque de recouvrement (40) définit, par projection parallèle le long d'un axe (80) orienté perpendiculairement à la plaque de recouvrement (40), au moins une ligne (66, 72), dans lequel le contenu d'affichage (76, 78) de l'au moins un appareil d'affichage (32, 34) est agrandi par l'au moins un module structural de guidage de lumière (36, 38) et l'au moins une partie du bord intérieur (50, 54) du cadre visible (46, 48) est projetée sur l'au moins une ligne (66, 72) de la plaque de recouvrement (40).

10. Procédé selon la revendication 9 pour représenter un contenu d'affichage (82) commun prévu pour au moins deux appareils d'affichage (32, 34), dans lequel, pour deux appareils d'affichage (32, 34) voisins, il est prévu qu'au moins une partie d'un bord extérieur (56) d'un cadre visible (48), qui entoure un champ d'affichage (42) d'un premier appareil d'affichage (32), et au moins une partie d'un bord extérieur (52, 56) d'un cadre visible (48), qui entoure un champ d'affichage (44) d'un second appareil d'affichage (34), soient mutuellement contigües à au moins une partie commune (74), dans lequel l'au moins une partie du bord extérieur (52, 56) du cadre visible (46, 48) définit l'au moins une ligne (66, 72) de la plaque de recouvrement (40) par projection parallèle le long de l'axe (80) orienté perpendiculairement à la plaque de recouvrement (40), dans lequel l'au moins une partie du bord intérieur (50) du cadre visible (46), qui délimite le champ d'affichage (42) du premier appareil d'affichage (32), et l'au moins une partie du bord intérieur (54), qui délimite le champ d'affichage (44) du second appareil d'affichage (34), sont projetées par l'au moins un module structural de guidage de lumière (36, 38) sur l'au moins une ligne (66, 72) de la plaque de recouvrement (40), dans lequel l'au moins une partie commune (74) des deux bords extérieurs (52, 56) des deux cadres visibles (46, 48) des champs d'affichage (42, 44) des deux appareils d'affichage (32, 34) voisins et l'au moins une ligne (66, 72) de la plaque de recouvrement (40) sont parallèles l'une à l'autre.

11. Procédé selon la revendication 10, selon lequel un module structural de guidage de lumière (36, 38) est associé à chacun des appareils d'affichage (32, 34), dans lequel des contenus d'affichage (76, 78) des deux appareils d'affichage (32, 34) voisins sont reliés par les modules structuraux de guidage de lumière (36, 38), qui sont associés à ces deux appareils d'affichage (32, 34), en le contenu d'affichage (82) commun.

12. Procédé selon la revendication 11, selon lequel les contenus d'affichage (76, 78) des deux appareils d'affichage (32, 34) voisins sont reliés par les modules structuraux de guidage de lumière (36, 38) le long de l'au moins une ligne (66, 72) de la plaque de recouvrement (40) en le contenu d'affichage (82) commun, dans lequel la partie commune (74) des deux bords extérieurs (52, 56) des deux appareils d'affichage (32, 34) voisins et l'au moins une ligne (66, 72) de la plaque de recouvrement (40) sont parallèles l'une à l'autre.
